(19) Europäisches Patentamt / European Patent Office / Office européen des brevets

(11) **EP 4 733 424 A1**

(12) **EUROPEAN PATENT APPLICATION**
published in accordance with Art. 153(4) EPC

(43) Date of publication:
**29.04.2026 Bulletin 2026/18**

(21) Application number: **24826287.5**

(22) Date of filing: **20.06.2024**

(51) International Patent Classification (IPC):
**C22B 7/00** (2006.01)   **C22B 26/12** (2006.01)
**C22B 1/00** (2006.01)   **C22B 21/00** (2006.01)
**H01M 10/54** (2006.01)   **C22C 24/00** (2006.01)
**C22B 5/02** (2006.01)

(52) Cooperative Patent Classification (CPC):
Y02P 10/20; Y02W 30/84

(86) International application number:
**PCT/KR2024/008565**

(87) International publication number:
**WO 2024/262972 (26.12.2024 Gazette 2024/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.06.2023 KR 20230079136**

(71) Applicants:
• **POSCO Holdings Inc.**
  **Pohang-si, Gyeongsangbuk-do 37859 (KR)**
• **POSCO Co., Ltd**
  **Pohang-si, Gyeongsangbuk-do 37859 (KR)**

(72) Inventors:
• **PARK, Junyong**
  **Pohang-si, Gyeongsangbuk-do 37859 (KR)**
• **PARK, Chong-Lyuck**
  **Pohang-si, Gyeongsangbuk-do 37859 (KR)**
• **LEE, Juseung**
  **Pohang-si, Gyeongsangbuk-do 37859 (KR)**
• **HAN, Sangwoo**
  **Pohang-si, Gyeongsangbuk-do 37859 (KR)**
• **KIM, Wanyi**
  **Pohang-si, Gyeongsangbuk-do 37859 (KR)**

(74) Representative: **Pfenning, Meinig & Partner mbB Patent- und Rechtsanwälte Theresienhöhe 11a 80339 München (DE)**

(54) **VALUABLE METAL RECOVERY COMPOSITION, AND METHOD FOR RECOVERING VALUABLE METAL**

(57) This embodiment relates to a valuable metal recovery composition comprising at least one unit valuable metal recovery composition, wherein the unit valuable metal recovery composition comprises a core portion containing a valuable metal and a shell portion disposed on at least a portion of the core portion, wherein the shell portion comprises an oxide containing lithium, and wherein a ratio of the unit valuable metal recovery composition having an average particle diameter (D⎵⎵) exceeding 4,000 μm is 70% or less of the total valuable metal recovery composition.

[FIG. 1]

# EP 4 733 424 A1

**Description**

**[Technical Field]**

The present embodiments relate to recycling of waste battery components, and more specifically, to a method for manufacturing an enriched metal from a spent battery, and more specifically, to a valuable metal recovery alloy, a valuable metal recovery composition, and a valuable metal recovery method.

**[Background Art]**

The issue of disposing of waste batteries from secondary batteries, for example, electric vehicles, is emerging globally. Secondary batteries, particularly lithium-ion batteries, contain fire problems caused by organic solvents, explosive materials, and heavy metal materials such as Ni, Co, Mn, and Fe. Among them, in the case of Ni, Co, Mn, and Li, they have scarcity value and utility value as valuable metals. Accordingly, recovery and recycling processes become very important issues after lithium-ion batteries are discarded.

Secondary batteries are mainly composed of copper (Cu) and aluminum (Al) used as a current collector, oxides containing lithium (Li), nickel (Ni), cobalt (Co), and manganese (Mn) constituting a positive electrode material (Cathode), and graphite utilized as a negative electrode material (Anode), and are composed of a separator separating the positive electrode material and the negative electrode material, and an electrolyte injected into the separator. The electrolyte may be composed of a solvent and a salt, and the solvent may be used by mixing carbonate organic materials such as Ethylene Carbonate and Propylene Carbonate, and for the salt, for example, $LiPF_6$ (Lithium hexafluorophosphate) may be used.

For recycling of the batteries of the secondary batteries, for example, battery cells, battery modules, and battery packs, waste batteries, which are batteries that have completed their use, undergo a crushing process, a grinding process, a specific gravity separation process, and a magnetic separation process to extract black powder in which the positive electrode material and the negative electrode material are mixed. The black powder includes, for example, oxides of nickel, cobalt, manganese, lithium, aluminum, and oxygen which are positive electrode materials, graphite which is a negative electrode material and mixtures thereof, and some impurities such as aluminum and copper.

Methods for recovering valuable metals from the black powder are largely divided into a wet process and a dry process. The wet process produces $NiSO_4$, $CoSO_4$, $MnSO_4$, and $Li_2CO_3$ through leaching-solvent extraction-lithium production. The biggest problems when treating the black powder with the wet process are that graphite, which is the negative electrode material contained in the black powder, does not dissolve in a strong acid atmosphere, so the leaching process takes a lot of time, and the recovery rate decreases as it is separated together with the graphite.

In addition, the dry process is a process of removing aluminum in slag through a high-temperature dry process for the black powder, and can generate a Ni-Co-Mn-C alloy. The dry process utilizes graphite and oxygen blowing at a high temperature, for example, 1400°C to 1600°C, to high-temperature reduce Ni-Mn-Li-Al-O oxides in the black powder to generate CO or $CO_2$ gas while being removed as a Ni-Co-Mn alloy and lithium and aluminum in slag. The separated Ni-Co-Mn alloy can undergo the same wet process. Since $NiSO_4$, $CoSO_4$, and $MnSO_4$ are produced through a leaching-solvent extraction process in the wet process, and carbon is dissolved in the alloy, the time required for the leaching process is reduced to a level of about 70% compared to when applying the black powder.

However, in the above process, not only are lithium and aluminum, which are valuable metals, exhausted as slag, but also the lithium becomes unrecoverable. In addition, excessive carbon dioxide is generated due to oxygen blowing for removing graphite in the black powder input to the high-temperature dry process, which may cause environmental problems.

Therefore, in order to solve the environmental problems, there is a need for the development of a high-temperature smelting reduction process and a ratio of alloyed components that can be manufactured with a carbon content of 10% or less in the Ni-Co-Mn alloy while minimizing the generation of carbon dioxide and minimizing the exhaustion of lithium, which is a valuable metal.

**[Detailed Description of the Invention]**

**[Technical Problem]**

The technical problem to be solved by the present invention is to provide a valuable metal recovery composition for providing a valuable metal recovery alloy that minimizes the generation of carbon dioxide in black powder, increases the degree of enrichment of valuable metals, prevents environmental pollution, and provides a high recovery rate of valuable metals.

Another technical problem to be solved by the present invention is to provide a valuable metal recovery method

2

for providing the valuable metal recovery alloy having the above advantages.

**[Technical Solution]**

According to an embodiment of the present invention, a valuable metal recovery composition relates to a valuable metal recovery composition comprising at least one unit valuable metal recovery composition, wherein the unit valuable metal recovery composition comprises a core portion containing a valuable metal and a shell portion disposed on at least a portion of the core portion, wherein the shell portion comprises an oxide containing lithium, and wherein a ratio of the unit valuable metal recovery composition having an average particle diameter (D□□) exceeding 4,000 μm may be 70% or less of the total valuable metal recovery composition. In one embodiment, the valuable metal recovery composition may satisfy the following Formula 1.

<Formula 1> $2.4 \leq [Ni]/[Co] \leq 4.5$

(In Formula 1, [Ni] and [Co] denote the weight % of Ni and Co, respectively)

In one embodiment, the unit valuable metal recovery composition comprises aluminum (Al), and the aluminum (Al) may have a concentration gradient that gradually increases from an interface between the core portion and the shell portion toward the shell portion. In one embodiment, it may include at least one of peaks at 2θ of 20.5 to 21.5°, 29.0 to 29.5°, 31.5 to 32.0°, 32.2 to 33.0°, 60.5 to 61.5°, 70.0 to 72.0°, 19.5 to 20.2°, 21.6 to 22.2°, 24.0 to 26.0°, 27.0 to 29.0°, 34.0 to 36.0°, 37.0 to 39.0°, 38.2 to 39.5°, 44.0 to 46.0°, 64.5 to 66.5°, and 77.77 to 79.77° in an XRD pattern.

In one embodiment, the oxide containing lithium may comprise at least one selected from LiAlO□, Li□AlO□, Li□CO□, and LiF. In one embodiment, the valuable metal recovery composition may satisfy the following Formula 2.

<Formula 2> $0.1 \leq IA/IB \leq 1.5$

(In Formula 2, IA is a peak intensity value of a LiAlO□ product at 2θ = 21° ± 0.5°, and IB is a peak intensity value of a LiAlO□ product at 2θ = 32.6° ± 0.4°)

In one embodiment, a ratio of the unit valuable metal recovery composition having an average particle diameter (D□□) of 500 μm or more to less than 4,000 μm may be 30% or more of 100% of the total valuable metal recovery composition. In one embodiment, a thickness of the shell portion of the unit valuable metal recovery composition having an average particle diameter (D□□) of 500 μm or more may be 30 to 1,100 μm.

In one embodiment, a thickness of the shell portion of the unit valuable metal recovery composition having an average particle diameter (D□□) of 250 μm or more to less than 500 μm may be 5 to 450 μm. In one embodiment, a thickness of the shell portion of the unit valuable metal recovery composition having an average particle diameter (D□□) of 150 μm or more to less than 250 μm may be 3.5 to 160 μm.

In one embodiment, the shell portion coupled to the core portion may be separated by an external force. In one embodiment, the valuable metal may comprise at least one selected from lithium (Li), cobalt (Co), nickel (Ni), aluminum (Al), and manganese (Mn).

According to another embodiment of the present invention, a method for recovering a valuable metal comprises preparing a battery or a battery shredded material in a cell unit, performing a dry heat treatment on the battery or the shredded material, and separating the heat-treated shredded material by at least one of particle size separation and magnetic separation, wherein the step of performing the dry heat treatment on the shredded material may perform heat treatment conditions of conducting a high-temperature reduction reaction under a temperature range of 1,150 to 1,800°C and an inert atmosphere containing 1% or less of oxygen without undergoing a melting step.

In one embodiment, in the step of preparing the battery shredded material, the battery shredded material satisfies the following Conditions 1 and 2.

<Condition 1> The layered structure is a laminated structure of 1 layer or more to 7 layers or less.

<Condition 2> The size of the unit battery shredded material is 100 mm or less based on a long axis, which is the longest axis among width, length, and height directions.

In one embodiment, the step of separating the heat-treated shredded material by at least one of particle size separation and magnetic separation may involve performing the magnetic separation first, followed by performing the particle size separation. In one embodiment, the lithium compound coupled to a portion of a surface of the valuable metal recovery alloy may be separated by an external force.

**[Advantageous Effects]**

According to an embodiment of the present invention, by reducing the carbon content from the battery shredded material, the generation of carbon dioxide is minimized, and a valuable metal recovery alloy capable of maximizing the recovery of valuable metals is provided.

According to another embodiment of the present invention, a method for recovering a valuable metal for providing the valuable metal recovery alloy having the above advantages is provided.

**[Brief Description of Drawings]**

FIG. 1 is an SEM photograph of a unit valuable metal recovery composition constituting a valuable metal recovery composition according to an embodiment of the present invention.

FIG. 2 is a flowchart regarding a method for recovering a valuable metal according to an embodiment of the present invention.

FIGS. 3a and 3b illustrate a battery shredded material according to an embodiment of the present invention.

FIGS. 4a and 4b show XRD analysis results of a composition for recovering a valuable metal according to an embodiment.

FIGS. 5a to 5c show SEM-EDS analysis results of a composition for recovering a valuable metal according to an embodiment.

FIG. 6 illustrates a particle size distribution of a core portion in a composition for recovering a valuable metal according to an embodiment.

**[Mode for Carrying Out the Invention]**

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is for the purpose of mentioning specific embodiments only and is not intended to limit the present invention. The singular forms used herein include the plural forms as well, unless the context clearly indicates the contrary. The meaning of "comprising" used in the specification specifies particular characteristics, regions, integers, steps, operations, elements, and/or components, but does not exclude the presence or addition of other characteristics, regions, integers, steps, operations, elements, and/or components.

When a part is referred to as being "on" or "above" another part, it may be directly on or above the other part, or another part may be interposed therebetween. In contrast, when a part is referred to as being "directly on" another part, no other part is interposed therebetween.

Although not defined differently, all terms including technical terms and scientific terms used herein have the same meanings as generally understood by those skilled in the art to which the present invention belongs. Terms defined in commonly used dictionaries are additionally interpreted to have meanings consistent with the related technical literature and the currently disclosed content, and are not interpreted in ideal or very formal meanings unless defined otherwise.

Hereinafter, embodiments of the present invention will be described in detail. However, these are presented as examples, and the present invention is not limited thereby, and the present invention is defined only by the scope of the claims to be described later.

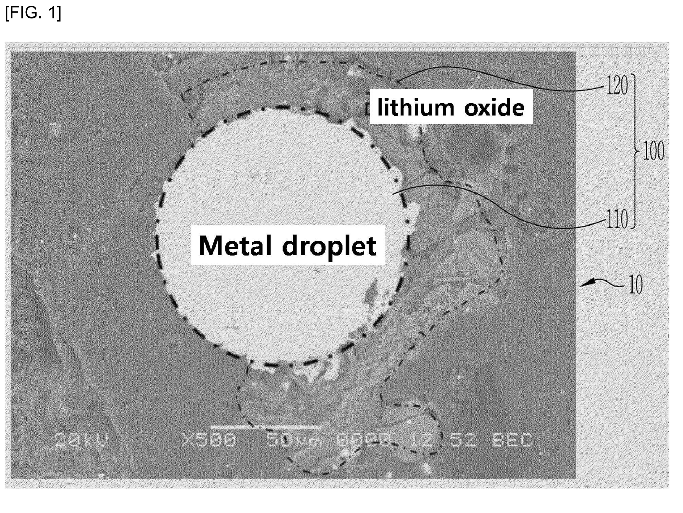

FIG. 1 is an SEM photograph of a unit valuable metal recovery composition constituting a valuable metal recovery composition according to an embodiment of the present invention.

Referring to FIG. 1, the valuable metal recovery composition 10 may include at least one unit valuable metal recovery composition 100. The unit valuable metal recovery composition 100 may include a core portion 110 containing a valuable metal and a shell portion 120 disposed on at least a portion of the core portion 110. Specifically, the unit valuable metal recovery composition 100 may be composed of a metal such as a valuable metal like Ni, Co, or Mn in the core portion 110, and an oxide containing lithium may be coupled and disposed on the core portion 110.

The core portion 110 includes a valuable metal recovery alloy, and the valuable metal recovery alloy may include 45% by weight or more of the valuable metal and the balance being impurities, based on 100% by weight of the total composition of the alloy. The valuable metal recovery alloy may include at least one of valuable metals such as nickel (Ni), cobalt (Co), manganese (Mn), lithium (Li), carbon (C), aluminum (Al), and copper (Cu), and the remaining amount of impurities. In the present specification, the valuable metal may mean a high-value metal component included in a battery, and may mean nickel, cobalt, manganese, aluminum, copper, and lithium. In one embodiment, the valuable metal may be 70% by weight or more.

In one embodiment, lithium (Li) among the valuable metals may be included in a range of 0.01 to 5% by weight. When the lithium satisfies the above range, there is an advantage of maximizing the Li recovery rate during the Li smelting process. If it exceeds the upper limit of the above range, there is a problem of a decrease in Ni and Co recovery rates, and if it is less than the lower limit of the above range, the Li recovery rate decreases during the Li smelting process, causing a problem of increased process costs.

In one embodiment, the valuable metal recovery alloy may include 0.02% by weight or more of copper (Cu). Specifically, the valuable metal recovery alloy may include copper in a range of 0.1 to 15% by weight. If the content of the copper exceeds the upper limit of the above range, there is a problem of process costs due to an increase in the amount of $CuSO_4$ precipitation in leaching and solvent extraction, and if the content of the copper is less than the lower limit of the above range, it is difficult to generate low-melting-point Ni-Co-Mn, causing a problem of an increase in the amount of unreacted materials.

In one embodiment, the copper may combine with nickel (Ni) among the valuable metals to form an alloy. In one embodiment, the nickel may be included in a range of 5 to 40% by weight. If the nickel exceeds the upper limit of the above range, there is a problem of a decrease in leaching speed due to the generation of nickel carbide ($Ni_3C$), and if the nickel is less than the lower limit of the above range, there is a problem of a decrease in Ni recovery rate in leaching and solvent extraction.

In one embodiment, the valuable metal recovery alloy may include carbon (C) in a range of 0.1 to 10% by weight. By satisfying the above range, the carbon can increase the actual yield and reduce the treatment time in the wet process. Specifically, the carbon may be included in a range of 1 to 7% by weight.

If it exceeds the upper limit of the above range, there is a problem that alloying is not properly performed as the negative electrode material remains in an unreacted state, and it remains in the form of a valuable metal oxide in the positive electrode material. If it is less than the lower limit of the above range, there is a problem that loss of lithium may occur due to high temperatures.

In one embodiment, the valuable metal recovery alloy may include aluminum (Al) in a range of 0.25 to 30% by weight. If the content of the aluminum exceeds the upper limit of the above range, there is a problem of a decrease in Ni and Co recovery rates during leaching and solvent extraction processes, and if the content of the aluminum is less than the lower limit of the above range, it is difficult to generate $LiAlO_2$, causing a problem of a decrease in Li recovery rate.

In one embodiment, the unit valuable metal recovery composition 100 in the valuable metal recovery composition 10 may satisfy the following Formula 1.

$$\text{<Formula 1> } 2.4 \leq [Ni]/[Co] \leq 4.5$$

(In Formula 1, [Ni] and [Co] denote the weight % of Ni and Co, respectively)

Formula 1 represents the content ratio of nickel to cobalt. When Formula 1 satisfies the aforementioned range, there is an advantage that the recovered valuable metal recovery composition 10 can be used as a material such as an NCM positive electrode material.

If Formula 1 exceeds the upper limit of the aforementioned range, there is a problem that the efficiency of magnetic separation decreases due to a decrease in the content of Co. If Formula 1 is less than the lower limit of the aforementioned range, it means that the reduction reaction and the resulting metal droplet formation are abnormally formed, and in this case, there is a problem that the recovery rate of Ni decreases.

In one embodiment, a ratio of the unit valuable metal recovery composition 100 having an average particle diameter ($D_{50}$) exceeding 4,000 $\mu$m may be 70% or less of 100% of the total valuable metal recovery composition 10. Specifically, the ratio may be 67% or less, more specifically 65% or less, and even more specifically 2.5 to 50%.

If the ratio exceeds the upper limit, it means that the reduction reaction for forming metal droplets, which are the core portion 110, was insufficient, and there is a problem that the metal recovery rate decreases rapidly. If the ratio is less than the lower limit, there is a problem that the leaching rate by hydrometallurgy of metal droplets decreases due to an increase in metal droplets having a particle size similar to that of graphite.

In one embodiment, a ratio of the unit valuable metal recovery composition 100 having an average particle diameter ($D_{50}$) of 500 $\mu$m or more to less than 4,000 $\mu$m may be 30% or more of 100% of the total valuable metal recovery composition 10. Specifically, the ratio may be 31.9% or more, more specifically 45.0 to 95% or less, and even more specifically 58.1 to 92.0% or less.

In one embodiment, in the valuable metal recovery composition 10, unlike Ni, Co, and Mn, lithium is not reduced to form an alloy but may combine with an Al component in the battery to form a lithium oxide.

In one embodiment, the valuable metal recovery composition 10 may include a shell portion 120 disposed on the core portion 110. The shell portion 120 may be a lithium oxide disposed on the core portion 110.

The lithium oxide may include, for example, a lithium-aluminum oxide. The lithium-aluminum oxide may be a lithium-aluminum compound. The lithium-aluminum oxide may be combined as an oxide by physical or chemical bonding between lithium included in the composition and the aluminum.

In one embodiment, the lithium oxide may include LiAlO□, Li□AlO□, Li□CO□, and LiF. The LiAlO□, Li□AlO□, and Li□CO□ correspond to lithium oxides reacted during a high-temperature reduction reaction process of battery shredded materials, and LiF may be a lithium oxide detected by a residual amount of electrolyte depending on a degree of pretreatment.

In one embodiment, it may include at least one of peaks at 2θ of 20.5 to 21.5°, 29.0 to 29.5°, 31.5 to 32.0°, 32.2 to 33.0°, 60.5 to 61.5°, 70.0 to 72.0°, 19.5 to 20.2°, 21.6 to 22.2°, 24.0 to 26.0°, 27.0 to 29.0°, 34.0 to 36.0°, 37.0 to 39.0°, 38.2 to 39.5°, 44.0 to 46.0°, 64.5 to 66.5°, and 77.77 to 79.77° in an XRD pattern.

In one embodiment, LiAlO□ may include at least one of 20.5 to 21.5°, 29.0 to 29.5°, 31.5 to 32.0°, 32.2 to 33.0°, 60.5 to 61.5°, and 70.0 to 72.0° as XRD peaks. Li□AlO□ may include at least one of 19.5 to 20.2° and 21.6 to 22.2° as XRD peaks.

The Li□CO□ composition may include at least one of 24.0 to 26.0°, 27.0 to 29.0°, 34.0 to 36.0°, and 37.0 to 39.0° as XRD peaks. The LiF composition may include at least one of 38.2 to 39.5°, 44.0 to 46.0°, 64.5 to 66.5°, and 77.77 to 79.77° as XRD peaks.

As described above, the valuable metal recovery composition 10 has at least one XRD peak value among LiAlO□, Li□AlO□, Li□CO□, and LiF, confirming that the lithium oxide is attached and disposed on the core portion containing the valuable metal.

In one embodiment, the valuable metal recovery composition 10 may satisfy the following Formula 2 with an intensity ratio of IA/IB as an XRD peak value.

$$\text{<Formula 2> } 0.1 \leq IA/IB \leq 1.5$$

(In Formula 2, IA is a peak intensity value of a LiAlO□ product at 2θ = 21° ± 0.5°, and IB is a peak intensity value of a LiAlO□ product at 2θ = 32.6° ± 0.4°)

Formula 2 is a relational expression for a ratio of peak intensity values at specific angles of LiAlO□, which is a lithium oxide in a composition containing a lithium-containing compound that is a reactant generated through a high-temperature reduction reaction described later. Formula 2 may satisfy 0.1 to 1.5, specifically 0.3 to 1.5, and more specifically 0.7 to 1.3.

If Formula 2 is less than the lower limit of the aforementioned range, a LiAl□O□□ phase with high Al□O□ is excessively generated, and accordingly, the Li leaching rate is lowered, causing a problem of a decrease in Li recovery rate. If Formula 2 exceeds the upper limit of the aforementioned range, a large amount of Li□O is generated, and there is a problem that the Li recovery rate decreases as lithium vaporizes as the temperature rises.

In one embodiment, the lithium oxide partially bonded to the surface of the valuable metal recovery alloy may be separated using a wet process. In another embodiment, the lithium oxide may be separated from the valuable metal recovery alloy by a mechanical or physical external force. In this way, not only can the valuable metal recovery alloy be recovered from the valuable metal recovery composition 10, but also the separation of the lithium compound can be performed simultaneously, so the recovery rate of lithium is high, thereby reducing the amount of lost lithium.

In one embodiment, the valuable metal recovery composition 10 may include a carbon-based material. The carbon-based material may be, for example, a carbon (C) element. The content of the carbon may be in a range of 1% to 7%. Since the content of the carbon satisfies the above range, there is an advantage in optimizing wet treatment of the valuable metal recovery composition.

If the content of the carbon exceeds the upper limit of the above range, there is a problem of a decrease in leaching speed due to the generation of nickel carbide (Ni□C), and if the content of the carbon is less than the lower limit of the above range, the content of other impurities such as Si increases, causing a problem of a decrease in recovery rates of valuable metals such as Ni and Co in solvent extraction after the leaching process.

In one embodiment, the valuable metal recovery composition 10 may include 10 to 30% by weight of aluminum (Al). Since the content of the aluminum satisfies the above range, a lithium compound can be formed through physical or chemical bonding with lithium, and there is an advantage that the yield of lithium can be increased as the lithium compound is separated in the future.

If the content of the aluminum exceeds the upper limit of the above range, there is a problem of an increase in process costs for Ni and Co solvent extraction and crystallization and a decrease in Ni and Co recovery rates due to excessive generation of Al□(SO□)□ in leaching and solvent extraction processes. If the content of the aluminum is less than the lower limit of the above range, there is a problem of poor Li-Al-O oxide generation due to a lack of aluminum content.

In one embodiment, the unit valuable metal recovery composition 100 includes aluminum (Al), and the aluminum (Al) may have a concentration gradient that gradually increases from an interface between the core portion 110 and the shell portion 120 toward the shell portion 120. The reason why the concentration gradient increases as the aluminum (Al) goes toward the shell portion 120 is that an oxide containing aluminum adheres onto the core portion 110 containing the valuable metal alloy.

In one embodiment, a thickness of the shell portion 120 of the unit valuable metal recovery composition having an average particle diameter ($D_{50}$) of the composition for valuable metal recovery 100 exceeding 500 μm may be 30 to 1,100 μm. Specifically, the thickness may be 30 to 1,000 μm, and more specifically, 30 to 950 μm.

In one embodiment, a thickness of the shell portion 120 of the unit valuable metal recovery composition having the composition for valuable metal recovery 100 exceeding 250 μm to less than 500 μm may be 5 to 450 μm. Specifically, the thickness may be 10 to 400 μm.

In one embodiment, a thickness of the shell portion 120 of the unit valuable metal recovery composition having the composition for valuable metal recovery 100 exceeding 150 μm to less than 250 μm may be 3.5 to 160 μm. Specifically, the thickness may be 5 to 150 μm.

If the thickness of the shell portion 120 exceeds the upper limit in the aforementioned average particle diameter range, there is a problem that the shell portion is excessively formed and the lithium oxide leaching rate decreases in a subsequent process. If the thickness of the shell portion 120 is less than the lower limit in the aforementioned average particle diameter range, there is a problem that separation between metal droplets and lithium oxide is not easy during magnetic separation, resulting in a decrease in recovery rate.

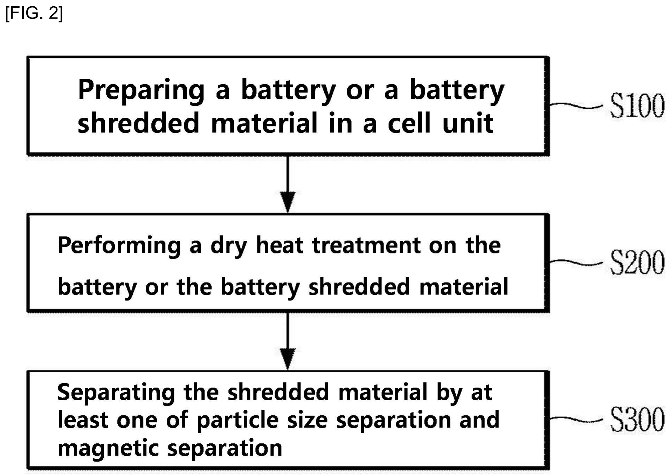

FIG. 2 is a flowchart regarding a method for recovering a valuable metal according to an embodiment of the present invention.

Referring to FIG. 2, in one embodiment, the method for recovering a valuable metal may include preparing a battery shredded material (S100), performing a dry heat treatment on the shredded material (S200), and separating the heat-treated shredded material by at least one of particle size separation and magnetic separation (S300). As a method for manufacturing an alloy having a high concentration content of a valuable metal recovery alloy, in particular, it may be a method for manufacturing an alloy having a higher concentration content for valuable metals compared to black powder that has undergone an initial crushing step. In addition, in the case of the valuable metal recovery alloy manufactured through the above manufacturing method, it is the same within a range that does not contradict the aforementioned FIG. 1.

The step of preparing the battery shredded material (S100) is a step of crushing and preparing a material serving as a base material of the battery shredded material, or preparing the completely crushed material itself. The base material of the battery shredded material may include waste materials in a manufacturing process of waste batteries, for example, lithium-ion batteries, such as batteries that have reached the end of their life, scrap constituting the waste batteries, positive electrode materials such as jelly rolls and slurry, defective products generated during the manufacturing process, residues inside the manufacturing process, and generated debris. The completely crushed material itself may be, for example, a completely crushed product itself such as black powder.

In one embodiment, the step of preparing the battery or the battery shredded material in a cell unit (S100) may further include, when preparing by crushing the material serving as the base material of the battery shredded material, crushing the material serving as the base material of the battery shredded material. A pulverized product can be obtained by using a crusher on the base material of the battery shredded material. The crushing may include, as non-limiting examples, breaking the waste battery by applying physical or mechanical force and pulverizing it into powder. The crushing step may separate some impurities having a large size among impurities such as aluminum (Al), copper (Cu), iron (Fe), and plastic in the configuration included in the waste battery. The state in which the large impurities are separated is referred to as black powder, and the battery shredded material such as black powder can be manufactured through the crushing step.

In one embodiment, the battery shredded material is for recovering valuable metals from waste batteries and may have a layered structure including a separator on which a positive electrode or a negative electrode is laminated on at least one surface. Specifically, the layered structure may include a configuration in which a positive electrode or a negative electrode is included on one surface or both surfaces of the separator based on the separator. More specifically, the number of layers of the layered structure may correspond to the number of separators.

The layered structure includes, for example, any one of positive electrode-separator-negative electrode, positive electrode-separator, separator-positive electrode, separator-negative electrode, and negative electrode-separator, and for example, positive electrode-separator-negative electrode-separator-positive electrode-separator-negative electrode may have a 3-layer layered structure. Specifically, as at least one or more layers are laminated, the battery shredded material may have a predetermined thickness in a thickness direction.

In one embodiment, the battery shredded material may satisfy the following Condition 1. <Condition 1> The layered structure may be a laminated structure of 1 layer or more to 7 layers or less.

The battery shredded material may be a layered structure having a laminated structure of 1 layer or more to 7 layers or less. Specifically, the layered structure may be a laminated structure of 1 layer or more to 5 layers or less. As the layered structure is laminated in the above range, the temperature rise amount of the shredded material is minimized, and the temperature raising time can be appropriately consumed. If the layered structure is laminated thicker than the upper limit of the above range, there is a problem that the temperature rise amount excessively increases, and the temperature raising time also increases, causing a fire as it burns.

In one embodiment, the battery shredded material may satisfy the following Condition 2. <Condition 2> The size of the battery shredded material may be 100 mm or less based on a long axis, which is the longest axis among width, length, and height directions.

In one embodiment, the battery shredded material may have a size of 100 mm or less based on the long axis. Specifically, the size of the battery shredded material may be 50 mm or less. If the size of the battery shredded material is excessively large, there is a problem that the probability of fire occurrence is high as the temperature of the battery shredded material itself rises to 100°C or higher.

In one embodiment, the surface of the battery shredded material may include a combustion portion and a normal portion. The combustion portion means a region where at least a portion of the surface of the battery shredded material is burned, and the normal portion means a normal portion having no traces of combustion on the surface.

In one embodiment, in the surface of the battery shredded material, an area ratio of the combustion portion to the normal portion may satisfy 30% or less. Since the area ratio of the combustion portion to the normal portion satisfies 30% or less, the possibility of fire occurring due to combustion of the battery shredded material can be prevented. If the area ratio of the combustion portion to the normal portion exceeds 30%, there is a risk that the battery shredded material burns to generate a fire accompanied by smoke.

In one embodiment, in the surface of the battery shredded material, the combustion portion may be disposed at an edge of the surface. The normal portion may be disposed near a center of the surface of the battery shredded material. The combustion portion means a region exhibiting a darker color compared to the normal portion.

In one embodiment, the battery shredded material may include aluminum (Al), manganese (Mn), lithium (Li), copper (Cu), cobalt (Co), nickel (Ni), carbon (C), and a remaining amount of impurities. In one embodiment, the black powder includes 5 to 40 wt% for nickel (Ni), 1 to 20 wt% for cobalt (Co), 1 to 15 wt% for manganese (Mn), 0.5 to 5 wt% for lithium (Li), 10 to 70 wt% for carbon (C), 0.0001 to 20 wt% for aluminum (Al), and 0.0001 to 20 wt% for copper (Cu), and a total sum of impurities such as iron (Fe) and phosphorus (P) may be less than 10 wt%. Components of the black powder may vary depending on ratios of nickel, cobalt, and manganese, and the nickel, cobalt, and manganese may be adjusted by a positive electrode active material oxide in the lithium secondary battery when the lithium secondary battery is crushed.

In one embodiment, the step of crushing the material serving as the base material of the battery shredded material may be a crushing method using at least one of shearing, compression, and tensile force. Specifically, the crushing step may be crushed by, for example, at least one of a hammer mill, a ball mill, and a stirring ball mill. The hammer mill may perform at least one step of disassembly, punching, and milling, and as a non-limiting example, it is obvious that it can be pulverized utilizing various types of crushing or pulverizing devices, for example, industrial pulverizers.

In one embodiment, a particle diameter of the battery shredded material may have a size within 50 mm, specifically within 30 mm. If it is larger than the above range, there is an uneconomical problem because more energy supply is required in the heat treatment step described later.

In one embodiment, before the step of crushing the material serving as the base material of the battery shredded material, a pretreatment step for explosion prevention or detoxification of the base material of the battery shredded material may be further included. By including the pretreatment step, materials with a risk of explosion such as the electrolyte in the base material are removed, and by discharging the base material such as a waste battery, safety can be increased and recovery and productivity of valuable metals can be increased during the crushing step.

The step of performing the dry heat treatment on the shredded material (S200) may put the shredded material into a heating furnace capable of raising the shredded material to a high temperature to raise the shredded material to a temperature equal to or higher than a melting point. The step of performing the dry heat treatment on the shredded material (S200) may involve heat treatment conditions of performing a high-temperature reduction reaction without undergoing a melting step.

In one embodiment, the heat treatment conditions may involve heat treatment conditions in a range of 1,150 to 1,800°C. Specifically, the range may be performed in a range of 1,150 to 1,400°C, and more specifically, 1,200 to 1,400°C. If it exceeds the upper limit of the above range, there is a problem of loss due to lithium vaporization, and if it is less than the lower limit of the above range, there is a problem that sintering and reduction of alloy elements do not proceed, resulting in excessive flake formation. In the above temperature range, the reduction reaction can be performed in a state where carbon dioxide generation is almost non-existent by burning carbon in the shredded material to a minimum.

In one embodiment, the step of performing the dry heat treatment on the shredded material (S200) may be performed in a gas atmosphere of at least one of an inert gas, carbon dioxide, carbon monoxide, and hydrocarbon gas. In the case of the inert gas, it may include, for example, at least one of argon and nitrogen. As the reduction reaction of the shredded material is performed in the gas atmosphere, the valuable metal recovery alloy including the valuable metal contained in the shredded material as a component can be effectively recovered.

In one embodiment, a portion of the gas atmosphere may include impurities containing a remaining amount of oxygen. If the content of the oxygen among the impurities is high, carbon dioxide can be formed by combining with components of the shredded material during the reduction reaction process, and accordingly, there is a problem that it is gasified together with lithium and recovery is difficult.

In one embodiment, the oxygen content in the dry heat treatment step (S200) may be 1% or less. Specifically, the oxygen content may be 0.1% or less. Specifically, if the partial pressure of the oxygen deviates from the aforementioned range, there is a problem that lithium loss and a large amount of carbon dioxide are generated in a localized high-temperature state.

Specifically, as a valuable metal recovery composition obtained by alloying components such as nickel, cobalt, manganese, and lithium-containing oxides in the shredded material in the step of performing dry heat treatment (S200), it may include valuable metals and a remaining amount of impurities. The valuable metal recovery composition may include, for example, aluminum (Al), manganese (Mn), lithium (Li), copper (Cu), cobalt (Co), nickel (Ni), carbon (C), and a remaining amount of impurities, and a detailed description thereof is the same within a range that does not contradict the valuable metal recovery composition described above in FIG. 1.

The valuable metal recovery composition may include a lithium compound, and the lithium compound may be produced by the reduction reaction. In one embodiment, the aluminum content in the valuable metal recovery composition may be 0.25 to 30% by weight. As the aluminum is added, there is an effect of reducing a stabilization temperature when generating a lithium compound, for example, lithium-alumina ($LiAlO_\square$).

If the aluminum content exceeds the upper limit of the above range, there is a problem of a decrease in Li recovery rate due to generation of Li-Al-O oxide ($LiAl_\square{}_\square O_\square{}_\square$) having a high $Al_\square O_\square$ content. If the content of the aluminum is less than the lower limit of the above range, there is a problem that Li-Al-O oxide generation is poor due to insufficient $Al_\square O_\square$ content.

In one embodiment, a stirring process may be added into the heat treatment furnace. In one embodiment, a stirring process may be added into the heat treatment furnace. Through the stirring process, for example, utilization of a rotating body or gas, promotion of reaction and uniformity of internal temperature in the heat treatment furnace, which is a high-temperature reduction furnace, can be secured. The valuable metal recovery composition can be recovered by the reduction reaction of the black powder in the heat treatment furnace.

The step of separating the heat-treated shredded material by at least one of particle size separation and magnetic separation (S300) may separate the heat-treated shredded material, for example, the valuable metal recovery alloy, by at least one of particle size separation and magnetic separation. The particle size separation method separates according to the size or diameter of particles, and may include various methods of separating using, for example, a sieve. The magnetic separation method utilizes a magnetic material and can separate particles through contact with the magnetic material, and various types of magnetic separation methods can be applied.

In one embodiment, the step of separating the heat-treated shredded material by at least one of particle size separation and magnetic separation (S300) may be a step of separating by at least one of particle size separation, magnetic separation, and specific gravity difference separation. The specific gravity difference separation is a method of separating particles by considering the difference in specific gravity for each material. For example, it is possible to separate particles based on whether the specific gravity of particles corresponding to a specific solvent is large or small by utilizing the specific solvent, and various types of specific gravity difference separation methods can be applied.

In one embodiment, the step of separating the heat-treated shredded material by at least one of particle size separation and magnetic separation (S300) includes all of the steps of performing the particle size separation, the magnetic separation, and the particle size separation and the magnetic separation together, thereby recovering the valuable metal recovery alloy. The step of performing only the particle size separation can recover the valuable metal recovery alloy only by particle size separation for the valuable metal recovery composition having a particle diameter of 100 μm to 100 mm or less.

In the case of the magnetic separation, when the valuable metal recovery composition includes a material having a particle diameter of 100 μm or less, the valuable metal can be recovered from the valuable metal recovery composition only by the magnetic separation. In the case of the material of 100 μm or less, since the particle diameter is similar to that of carbon, the recovery rate of valuable metals lost only by the particle size separation can be increased through the magnetic separation.

In one embodiment, when performing the particle size separation and the magnetic separation together, the magnetic separation may be performed first, followed by performing the particle size separation. By preceding the magnetic separation, loss of the valuable metal recovery alloy from the valuable metal recovery composition of 100 μm or less can be prevented.

In one embodiment, the step of separating the heat-treated shredded material by at least one of particle size separation and magnetic separation (S300) may further include a step of separating from a lithium compound containing lithium. The step of separating from the lithium compound containing lithium may be performed before or after the step of separating the heat-treated shredded material by at least one of particle size separation and magnetic separation (S300).

The lithium compound may be, for example, a lithium-containing oxide, and may be separated by a physical external force. For a detailed description thereof, reference may be made to the valuable metal recovery composition of FIG. 1 within a range that does not contradict. In this way, by separating the lithium-containing oxide by a physical external force, the recovery rate of not only valuable metals but also lithium can be increased.

In one embodiment, before the step of preparing the battery shredded material (S100), a step of freezing the battery may be further included. When the base material of the battery shredded material is the battery itself, it has been described above that it must undergo a step of crushing it.

When using a battery as the base material of the battery shredded material, a step of freezing the battery may be included before crushing the battery. In the case of directly crushing the battery, explosion and fire may occur due to the electrolyte contained in the battery. Specifically, as a specific pressure is applied to the battery, the separator is physically crushed to form a high current due to the occurrence of a short circuit, generating a spark, and as the electrolyte is ignited due to this spark, a fire may occur.

The step of freezing the battery freezes the battery to suppress ignition of the liquid electrolyte contained in the battery, and then performs the crushing process, so that problems due to electrolyte ignition do not occur.

In one embodiment, the step of freezing the battery may be performed by cooling to a range of -150°C to -60°C. If it exceeds the upper limit of the above temperature range, the voltage remaining inside the battery does not drop to 0 V, so a battery reaction due to a short circuit may occur, and the electrolyte is not completely frozen, which is not appropriate.

If it is less than the lower limit of the above temperature range, the electrolyte is sufficiently frozen, and the internal voltage of the battery also drops to 0 V. Thus, even if a short circuit occurs in which the positive electrode and the negative electrode directly contact, the battery reaction does not occur, so the battery temperature does not increase, and gas generation and combustion of the electrolyte do not occur. In addition, since the electrolyte is in a frozen state, the mobility of lithium ions is very low, so conduction characteristics due to lithium ion movement can be remarkably reduced, and since vaporization of the electrolyte does not occur, flammable gases such as ethylene, propylene, and hydrogen may not be generated.

In the step of freezing the battery, if it exceeds the upper limit of the above temperature range, the voltage remaining inside the battery does not drop to 0 V, so a battery reaction due to a short circuit may occur, and the electrolyte is not completely frozen, which is not appropriate. If it is less than the lower limit of the above temperature range, there is an uneconomical problem because a lot of energy must be administered for freezing.

In one embodiment, the step of freezing the battery may be performed by cooling to a temperature range of -60 to -20°C under a vacuum atmosphere condition of 100 torr or less. The step of freezing the battery may be performed in the above temperature range, which is a temperature capable of suppressing vaporization of the electrolyte. The vacuum atmosphere may be, for example, an inert gas, carbon dioxide, nitrogen, water, or a combination thereof.

Since it is performed by adjusting the pressure to a vacuum atmosphere of 100 torr or less, by suppressing oxygen supply, it is possible to prevent the electrolyte from reacting with oxygen, thereby preventing explosion due to this, and it is possible to suppress vaporization of the electrolyte, so that flammable gases such as ethylene, propylene, and hydrogen may not be generated.

In the step of freezing the battery, if it is performed in an air atmosphere or performed at a pressure exceeding 100 torr, voltage may remain in the battery, and since the electrolyte is not in a frozen state in the temperature range of -60 to -20°C, there is a problem that the electrolyte vaporizes and explodes due to sparks generated when a short circuit occurs due to the remaining voltage.

As described above, according to an embodiment of the present invention, by having a degree of concentration of 150 to 500% for the content of the valuable metals, for example, nickel, cobalt, lithium, and manganese, compared to the constituent content of the heat-treated battery shredded material, the recovery rate of valuable metals is excellent, and it is possible to provide a method for manufacturing an eco-friendly waste battery recovery alloy capable of suppressing carbon dioxide generation during a post-process by containing less than 10% of carbon.

In order to describe the present invention in more detail, examples of the present invention are described. The following examples are only one embodiment of the present invention, and the present invention is not limited to the following examples.

[Experimental Examples]

In the experimental examples of the present invention, for carbon content analysis, measurement was performed by a combustion method utilizing a CS analyzer (LECO Corp.). In addition, for oxygen content analysis, measurement was performed by an infrared detection method utilizing a NO analyzer (LECO Corp.). Furthermore, for inorganic substances other than the carbon and the oxygen, component analysis was performed through ICP wet analysis.

In the experimental examples of the present invention, for particle size measurement, particle size analysis by material was estimated through component analysis of materials separated by particle size analysis and screening utilizing a particle size analyzer.

## 1. Step of preparing battery shredded material

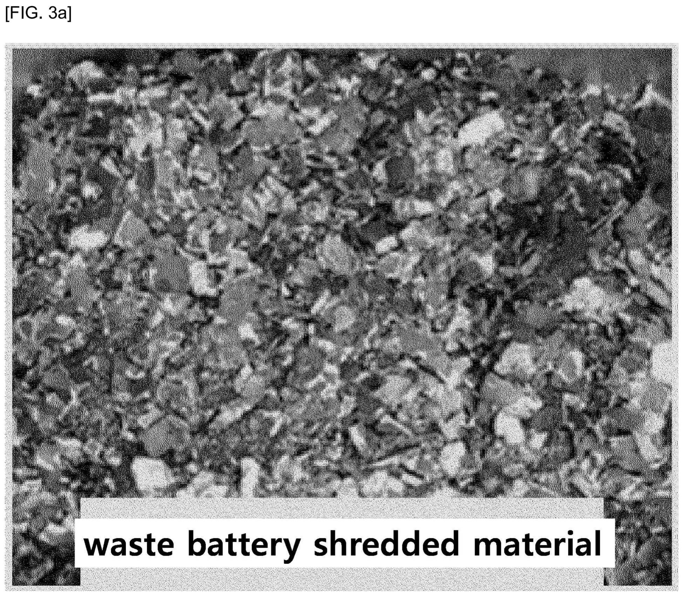

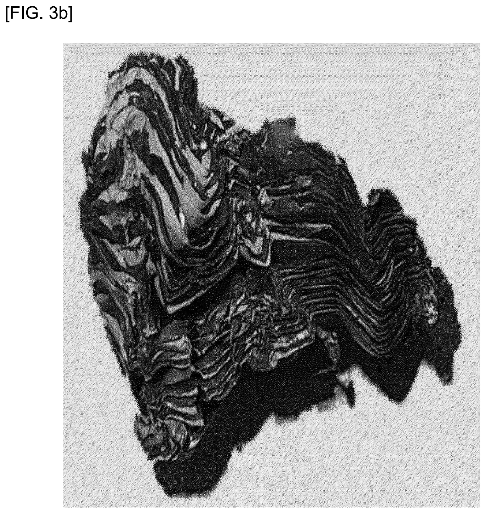

Figures 3a and 3b illustrate a battery shredded material according to an embodiment of the present invention.

Looking at Figures 3a and 3b, it can be confirmed that the battery shredded material has a layered structure in which a positive electrode, a negative electrode, and a separator are sequentially laminated. Specifically, it can be confirmed that the layered structure of the battery shredded material is laminated in at least one stage or more, and the size of the battery shredded material is 100 mm or less. The size of the battery shredded material means the length of a long axis among the width, length, and height of the battery shredded material.

## 2. Dry heat treatment step

### <Components of composition for valuable metal recovery according to high-temperature reduction process>

By performing heat treatment on the battery shredded material shown in Figures 3a and 3b under conditions of a temperature of 1,100°C or higher, which is higher than the melting point of Cu, and an oxygen content of less than 1%, since carbon exists within the negative electrode active material, it reacts with oxygen partially included in the gas to generate CO gas, and a reducing atmosphere can be formed. Accordingly, metal oxides within the positive electrode active material are reduced to finally form a metal core portion.

Table 1 below shows the range of components of a magnetic body when magnetic separation is performed on the result of conducting a high-temperature reduction reaction on the battery shredded material shown in Figures 3a and 3b within the temperature range and oxygen content range of Table 1 below. Specifically, the magnetic body represents the component range of a magnetic body including a valuable metal recovery alloy. At this time, it was confirmed that the used raw material was NCM622, and the ratio of Ni, Co, and Mn in the battery was formed close to the initial composition ratio of 6:2:2. In addition, the alloy recovered in the range of a Ni/Co weight ratio of 3.0 $\pm$ 1.6 included impurities of Na: 2 wt% or less, K: 0.1 wt% or less, Ca: 0.7 wt% or less, and Mg: 0.5 wt% or less.

[Table 1]

| | Heat treatment conditions | | Ni | Co | Cu | Mn | C | Ni/Co weight ratio |
|---|---|---|---|---|---|---|---|---|
| | Temperature [°C] | Oxygen content [%] | | | | | | |
| Experi | 1100~140 | Less | 14.3~59.8 | 5.8-16.9 | 1.3~27.6 | 5.2~16.6 | 1.5~33.8 | 2.4-4.5 |
| mental Example | 0 | than 1% | | | | | | |

Looking at Table 1 above, it was confirmed that as the oxygen content satisfied a content of less than 1% in the high-temperature reduction process and the heat treatment was performed in a temperature range equal to or higher than the melting point of copper, the Ni/Co weight ratio satisfied 2.4 to 4.5, and the content of valuable metals was high.

### <XRD analysis results of composition for valuable metal recovery according to high-temperature reduction process>

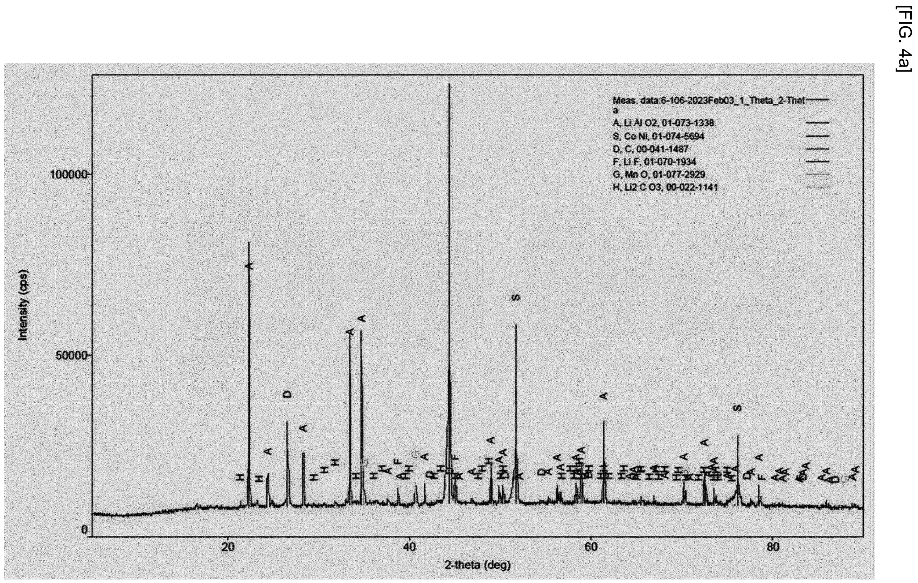

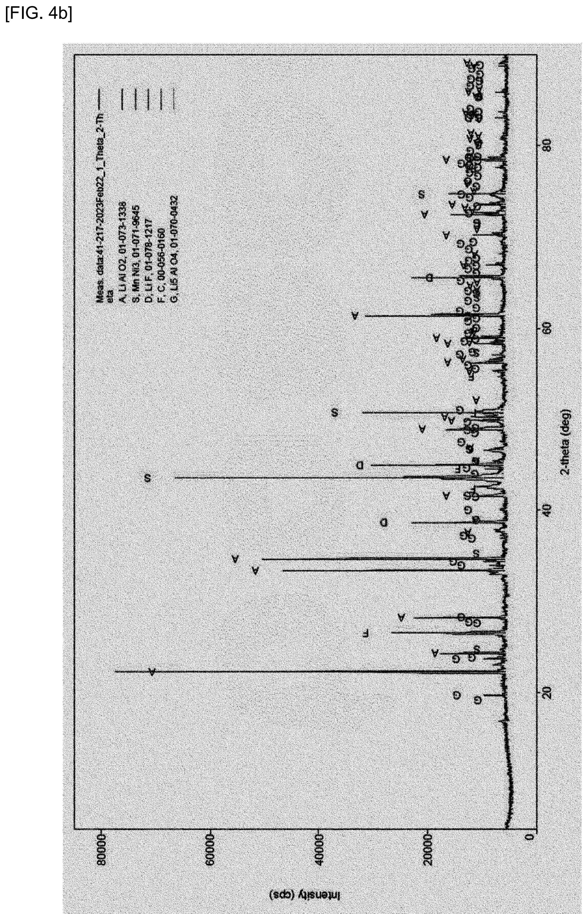

Figures 4a and 4b show XRD analysis results of a composition for valuable metal recovery according to an embodiment.

Looking at Figures 4a and 4b, the battery shredded material shows the XRD analysis results of the composition for valuable metal recovery subjected to heat treatment under conditions of a temperature of 1,200°C or higher and an oxygen content of less than 1%. Specifically, it was confirmed that, unlike Ni, Co, and Mn, the lithium component was not reduced to form an alloy but combined with the Al component in the waste battery to form a lithium oxide. Specifically, it was confirmed that the lithium oxide was formed of LiAlO□, Li□AlO□, and Li□CO□, and LiF was also detected depending on the residual amount of electrolyte.

**<SEM-EDS analysis results of composition for valuable metal recovery according to high-temperature reduction process>**

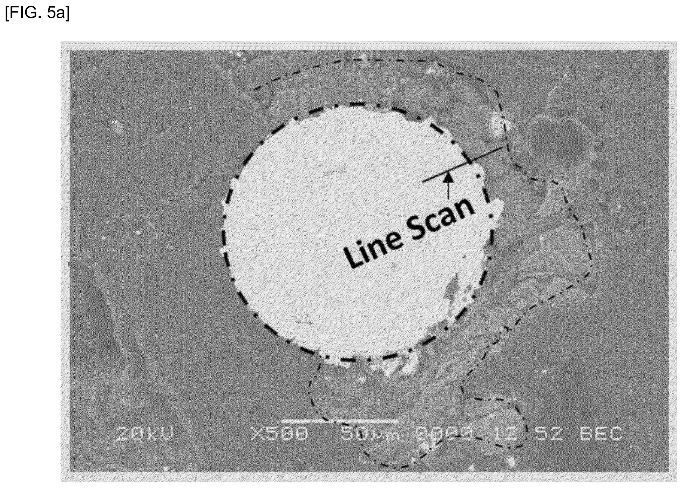

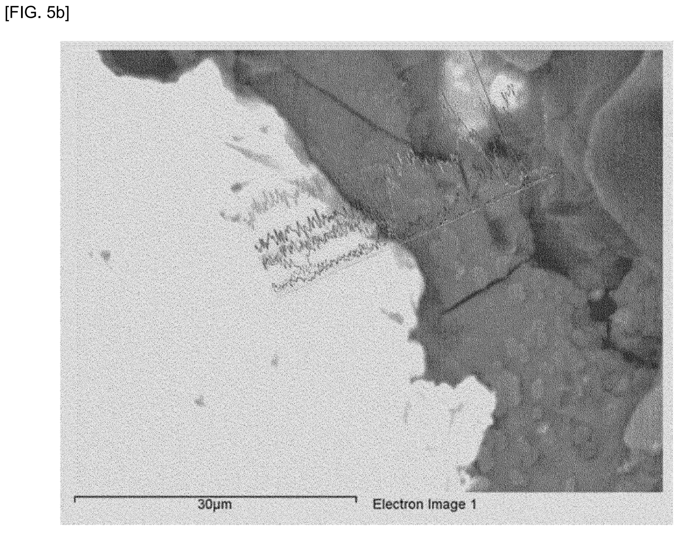

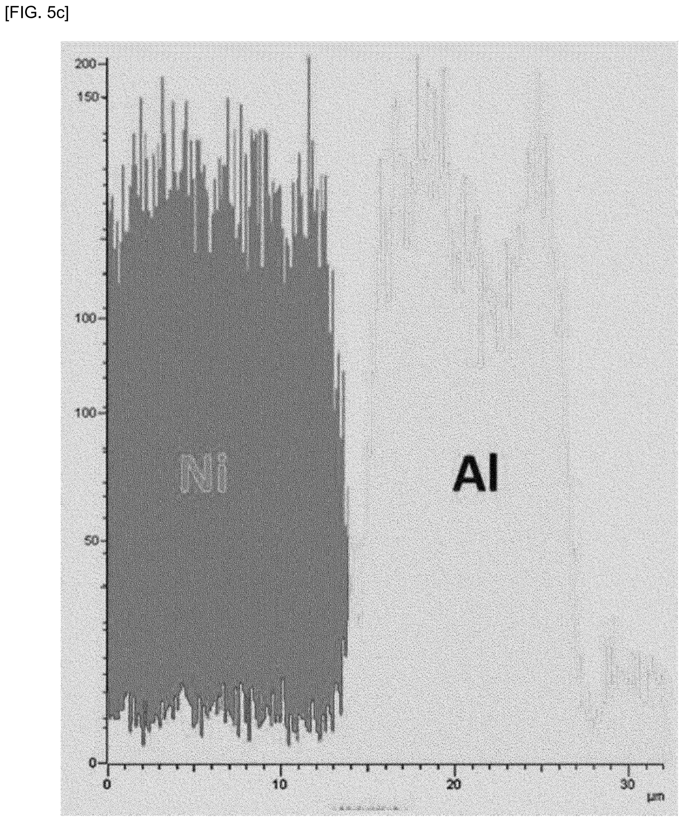

Figures 5a to 5c show SEM-EDS analysis results of a composition for valuable metal recovery according to an embodiment.

Looking at Figures 5a to 5c, examining the Linescan component analysis results for the metal core portion and the lithium oxide surrounding the metal core portion, it can be confirmed that the content of Al is minute in the metal core portion, while it is detected in a large amount in the lithium oxide surrounding the core portion. This was confirmed as LiAlO$_{\square}$ or Li$_{\square}$AlO$_{\square}$, not Al$_{\square}$O$_{\square}$, as a result of XRD analysis.

**<Particle size distribution of composition for valuable metal recovery according to high-temperature reduction process>**

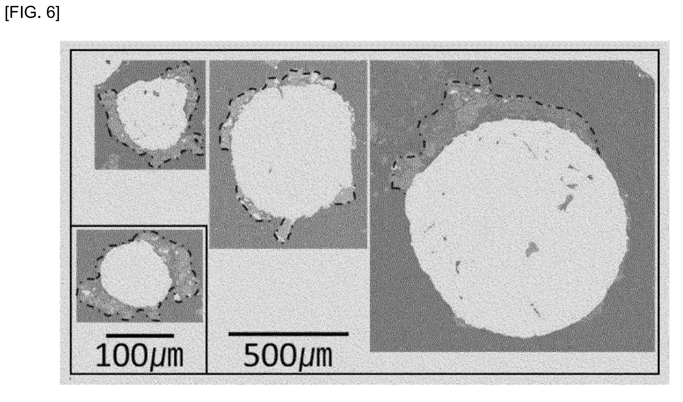

Figure 6 illustrates a particle size distribution of a composition for valuable metal recovery according to an embodiment.

Looking at Figure 6, it can be confirmed that the composition for valuable metal recovery, specifically, the composition including the core portion and the shell portion, has a particle size distribution as shown in Table 2 below.

Table 2 below shows the particle size distribution including the composition for valuable metal recovery, specifically, metal droplets and oxides formed in the vicinity thereof, formed according to the heat treatment temperature in the high-temperature reduction process under the condition where the oxygen concentration is 1% or less. The particle size distribution means that the average particle diameter (D$_{\square\square}$) of the composition including the core portion and the oxide formed around the core portion is included in the range of Table 2 below, and the particle size distribution was weighed after sorting by particle size using screen vibration sorting equipment.

[Table 2]

| | Heat treatment temperature [°C] | Ratio of magnetic body in total reactant [%] | Particle size distribution of composition including metal droplet and oxide formed in vicinity thereof [%] | | |
|---|---|---|---|---|---|
| | | | 4000 $\mu$m or more | 250 $\mu$m or more to less than 4000 $\mu$m | Less than 250 $\mu$m |
| Experimental Example | 1100 | 51 | 66.8 | 31.9 | 1.3 |
| Experimental Example | 1250 | 49 | 38.0 | 58.1 | 3.2 |
| Experimental Example | 1400 | 50 | 3.1 | 92 | 4.9 |

Looking at Table 2 above, as the heat treatment temperature increased from 1,100°C to 1,400°C, the ratio of the magnetic body in the total reactant was about 50%, showing no significant difference. However, looking at the particle size distribution of 4,000 $\mu$m or more among the magnetic bodies, it can be seen that it rapidly decreases to 66.8%, 38.0%, and 3.1% as the heat treatment temperature increases. This is because, at 1,100°C, the reduction amount of the positive electrode material oxide is not sufficient, so the bulky structure (flake type) of the existing shredded material can be maintained as it is, existing as large particles of 4,000 $\mu$m or more, and the amount of such unreacted flake-type reactants decreased as the temperature increased. It can be seen that as the heat treatment temperature increases, the distribution ratio of micron particle size distribution exceeding 250 $\mu$m and less than 4,000 $\mu$m increases to 31.9%, 58.1%, and 92.0% as the temperature increases due to the increase in the reduction amount of the positive electrode material oxide and the consequent facilitation of alloying. Specifically, at 1,100°C where the heat treatment temperature is low, the material having a particle size of 4,000 $\mu$m or more occupies the highest ratio, because the reduced metal component is not completely melted and thus fails to form a droplet, which is the metal core portion, and has a flake form maintaining the shape of the shredded material having a large particle size.

On the other hand, when the heat treatment temperature rises, the material having a coarse particle size of 4,000 $\mu$m or more decreases, and the particle size distribution below that increases. At 1,400°C where the temperature is high, it can be confirmed that the coarse particle size maintaining the shape of the flake-type shredded material is small, and the distribution amount having a particle size lower than this is large. Through this, it was confirmed that the reduced metal was sufficiently melted at a high temperature, and the ratio of particle sizes capable of being formed into droplets was high.

As such, it was confirmed that the larger the particle size distribution having a particle size of 250 $\mu$m or more to less than 4,000 $\mu$m of the heat treatment result, the more coarse droplets are easy to be processed into droplets, so that magnetic separation becomes easier in the post-process, the recovery rate of valuable metals and lithium is high, and the thickness of the lithium oxide surrounding the metal core portion also varies depending on the particle size of the metal droplet.

**<Range of lithium oxide thickness according to particle size of composition for valuable metal recovery according to high-temperature reduction process>**

Table 3 below shows the range of the thickness of the lithium oxide surrounding the metal core portion according to the particle size of the metal droplet described in Table 2 above.

The thickness of the lithium oxide was measured using SEM equipment for an area of 1900 $\mu$m $\times$ 2500 $\mu$m.

[Table 3]

| | | Particle size distribution of composition for valuable metal recovery | | | |
|---|---|---|---|---|---|
| | | 1000 $\mu$m or more ~ less than 4000 $\mu$m | 500 $\mu$m or more ~ less than 1000 $\mu$m | 250 $\mu$m or more ~ less than 500 $\mu$m | 150 $\mu$m or more ~ less than 250 $\mu$m |
| Thickness of lithium oxide [$\mu$m] | Min value | 50 | 30 | 10 | 5 |
| | Max value | 1050 | 950 | 400 | 150 |

Looking at Table 3 above, it was confirmed that the thickness of the lithium oxide was large in the range where the particle size distribution of the metal droplet was 500 $\mu$m or more. Through this, it was confirmed that when the distribution in the range where the particle size of the metal droplet is large occupies the majority in the particle size distribution of the entire composition, the thickness of the lithium oxide is thick, magnetic separation of the metal core portion is easy, and recovery of lithium is easy through recovery of the lithium oxide attached to the surface of the metal core portion.

The present invention is not limited to the above embodiments but may be manufactured in various different forms, and those skilled in the art to which the present invention pertains will understand that it may be implemented in other specific forms without changing the technical spirit or essential features of the present invention. Therefore, the embodiments described above should be understood as illustrative in all respects and not restrictive.

**Claims**

1. A valuable metal recovery composition comprising at least one unit valuable metal recovery composition,

   wherein the unit valuable metal recovery composition comprises: a core portion containing a valuable metal; and a shell portion disposed on at least a portion of the core portion,
   wherein the shell portion comprises an oxide containing lithium, and

   wherein a ratio of the unit valuable metal recovery composition having an average particle diameter (D$_{\llcorner\lrcorner}$) exceeding 4,000 $\mu$m is 70% or less of the total valuable metal recovery composition.

2. The valuable metal recovery composition of claim 1,

   which satisfies the following Formula 1:

$$\text{<Formula 1> } 2.4 \leq [Ni]/[Co] \leq 4.5$$

   (In Formula 1, [Ni] and [Co] denote the weight % of Ni and Co, respectively).

3. The valuable metal recovery composition of claim 1,

   wherein the unit valuable metal recovery composition comprises aluminum (Al), and
   wherein the aluminum (Al) has a concentration gradient that gradually increases from an interface between the core portion and the shell portion toward the shell portion.

4. The valuable metal recovery composition of claim 1,
comprising at least one of peaks at 2θ of 20.5 to 21.5°, 29.0 to 29.5°, 31.5 to 32.0°, 32.2 to 33.0°, 60.5 to 61.5°, 70.0 to 72.0°, 19.5 to 20.2°, 21.6 to 22.2°, 24.0 to 26.0°, 27.0 to 29.0°, 34.0 to 36.0°, 37.0 to 39.0°, 38.2 to 39.5°, 44.0 to 46.0°, 64.5 to 66.5°, and 77.77 to 79.77° in an XRD pattern.

5. The valuable metal recovery composition of claim 1,
wherein the oxide containing lithium comprises at least one selected from LiAlO□, Li□AlO□, Li□CO□, and LiF.

6. The valuable metal recovery composition of claim 1,

which satisfies the following Formula 2:

<Formula 2> 0.1 ≤ IA/IB ≤ 1.5

(In Formula 2, IA is a peak intensity value of a LiAlO□ product at 2θ = 21° ± 0.5°, and IB is a peak intensity value of a LiAlO□ product at 2θ = 32.6° ± 0.4°).

7. The valuable metal recovery composition of claim 1,
wherein a ratio of the unit valuable metal recovery composition having an average particle diameter ($D_{□□}$) of 500 μm or more to less than 4,000 μm is 30% or more of 100% of the total valuable metal recovery composition.

8. The valuable metal recovery composition of claim 1,
wherein a thickness of the shell portion of the unit valuable metal recovery composition having an average particle diameter ($D_{□□}$) of 500 μm or more is 30 to 1,100 μm.

9. The valuable metal recovery composition of claim 1,
wherein a thickness of the shell portion of the unit valuable metal recovery composition having an average particle diameter ($D_{□□}$) of 250 μm or more to less than 500 μm is 5 to 450 μm.

10. The valuable metal recovery composition of claim 1,
wherein a thickness of the shell portion of the unit valuable metal recovery composition having an average particle diameter ($D_{□□}$) of 150 μm or more to less than 250 μm is 3.5 to 160 μm.

11. The valuable metal recovery composition of claim 1,
wherein the shell portion coupled to the core portion is separated by an external force.

12. The valuable metal recovery composition of claim 1,
wherein the valuable metal comprises at least one selected from lithium (Li), cobalt (Co), nickel (Ni), aluminum (Al), and manganese (Mn).

13. A method for recovering a valuable metal, comprising:

preparing a battery or a battery shredded material in a cell unit;
performing a dry heat treatment on the battery or the shredded material; and
separating the heat-treated shredded material by at least one of particle size separation and magnetic separation, wherein the step of performing the dry heat treatment on the shredded material involves performing heat treatment conditions of conducting a high-temperature reduction reaction under a temperature range of 1,150 to 1,800°C and an inert atmosphere containing 1% or less of oxygen without undergoing a melting step.

14. The method for recovering a valuable metal of claim 13,
wherein, in the step of preparing the battery shredded material, the battery shredded material satisfies the following Conditions 1 and 2:

<Condition 1> The layered structure is a laminated structure of 1 layer or more to 7 layers or less.
<Condition 2> The size of the unit battery shredded material is 100 mm or less based on a long axis, which is the longest axis among width, length, and height directions.

15. The method for recovering a valuable metal of claim 13,
wherein the step of separating the heat-treated shredded material by at least one of particle size separation and magnetic separation involves performing the magnetic separation first, followed by performing the particle size separation.

16. The method for recovering a valuable metal of claim 13,
wherein the lithium compound coupled to a portion of a surface of a valuable metal recovery alloy is separated by an external force.

[FIG. 1]

[FIG. 2]

| | |
|---|---|
| **Preparing a battery or a battery shredded material in a cell unit** | S100 |
| **Performing a dry heat treatment on the battery or the battery shredded material** | S200 |
| **Separating the shredded material by at least one of particle size separation and magnetic separation** | S300 |

[FIG. 3a]

waste battery shredded material

[FIG. 3b]

[FIG. 4a]

[FIG. 4b]

[FIG. 5a]

[FIG. 5b]

[FIG. 5c]

[FIG. 6]

## INTERNATIONAL SEARCH REPORT

International application No.

**PCT/KR2024/008565**

### A. CLASSIFICATION OF SUBJECT MATTER

**C22B 7/00**(2006.01)i; **C22B 26/12**(2006.01)i; **C22B 1/00**(2006.01)i; **C22B 21/00**(2006.01)i; **H01M 10/54**(2006.01)i; **C22C 24/00**(2006.01)i; **C22B 5/02**(2006.01)i

According to International Patent Classification (IPC) or to both national classification and IPC

### B. FIELDS SEARCHED

Minimum documentation searched (classification system followed by classification symbols)

C22B 7/00(2006.01); B02C 19/00(2006.01); B09B 101/16(2022.01); B09B 3/40(2022.01); C01D 15/02(2006.01); C22B 26/12(2006.01); H01M 10/052(2010.01); H01M 10/54(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 유가 금속 회수 조성물(composition for recovery of valuable metals), 코어(core), 쉘(shell), 리튬 산화물(lithium oxide), 입경(particle size)

### C. DOCUMENTS CONSIDERED TO BE RELEVANT

| Category* | Citation of document, with indication, where appropriate, of the relevant passages | Relevant to claim No. |
|---|---|---|
| Y | KR 10-2022-0148201 A (DOWA ECO-SYSTEM CO., LTD.) 04 November 2022 (2022-11-04) See paragraphs [0040]-[0213]; and claims 1-7. | 1,3-7,11-12 |
| A | | 2,8-10 |
| Y | JP 2020-064855 A (DOWA ECO-SYSTEM CO., LTD.) 23 April 2020 (2020-04-23) See paragraphs [0049]-[0056]. | 1,3-7,11-12 |
| Y | KR 10-2022-0038441 A (BASF SE) 28 March 2022 (2022-03-28) See paragraph [0245]. | 4,6 |
| A | KR 10-2012-0097851 A (HEE SUNG METAL LTD. et al.) 05 September 2012 (2012-09-05) See claim 1. | 1-12 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 October 2024** | **24 October 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/008565**

| C. | DOCUMENTS CONSIDERED TO BE RELEVANT | |
|---|---|---|
| Category* | Citation of document, with indication, where appropriate, of the relevant passages | Relevant to claim No. |
| A | KR 10-1883100 B1 (INDUSTRY-ACADEMIC COOPERATION FOUNDATION, YONSEI UNIVERSITY) 27 July 2018 (2018-07-27)<br>See claim 1. | 1-12 |

Form PCT/ISA/210 (second sheet) (July 2022)

## INTERNATIONAL SEARCH REPORT

International application No.

**PCT/KR2024/008565**

| Box No. III | Observations where unity of invention is lacking (Continuation of item 3 of first sheet) |
|---|---|

This International Searching Authority found multiple inventions in this international application, as follows:

Claims 1-12 pertain to a valuable metal recovery composition including characteristics of a unit valuable metal recovery material comprising a core portion (valuable metal) and a shell portion (oxide containing lithium),
Claims 13-16 pertain to a method for recovering valuable metal by using a battery or battery waste.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **claims 1-12**

**Remark on Protest**
☐ The additional search fees were accompanied by the applicant's protest and, where applicable, the payment of a protest fee.
☐ The additional search fees were accompanied by the applicant's protest but the applicable protest fee was not paid within the time limit specified in the invitation.
☐ No protest accompanied the payment of additional search fees.

Form PCT/ISA/210 (continuation of first sheet) (July 2022)

**INTERNATIONAL SEARCH REPORT**
Information on patent family members

International application No.

**PCT/KR2024/008565**

| Patent document cited in search report | | | Publication date (day/month/year) | Patent family member(s) | | | Publication date (day/month/year) |
|---|---|---|---|---|---|---|---|
| KR | 10-2022-0148201 | A | 04 November 2022 | CN | 115244758 | A | 25 October 2022 |
| | | | | EP | 4116000 | A1 | 11 January 2023 |
| | | | | JP | 2021-141060 | A | 16 September 2021 |
| | | | | JP | 6984055 | B2 | 17 December 2021 |
| | | | | TW | 202137623 | A | 01 October 2021 |
| | | | | US | 2023-0119544 | A1 | 20 April 2023 |
| | | | | WO | 2021-177200 | A1 | 10 September 2021 |
| JP | 2020-064855 | A | 23 April 2020 | JP | 6748274 | B2 | 26 August 2020 |
| KR | 10-2022-0038441 | A | 28 March 2022 | CA | 3144711 | A1 | 04 February 2021 |
| | | | | CA | 3144716 | A1 | 04 February 2021 |
| | | | | CA | 3144899 | A1 | 04 February 2021 |
| | | | | CN | 114174545 | A | 11 March 2022 |
| | | | | CN | 114207161 | A | 18 March 2022 |
| | | | | CN | 114207162 | A | 18 March 2022 |
| | | | | EP | 4004244 | A1 | 01 June 2022 |
| | | | | EP | 4004245 | A1 | 01 June 2022 |
| | | | | EP | 4004246 | A1 | 01 June 2022 |
| | | | | JP | 2022-541321 | A | 22 September 2022 |
| | | | | JP | 2022-542362 | A | 03 October 2022 |
| | | | | JP | 2022-542879 | A | 07 October 2022 |
| | | | | KR | 10-2022-0038440 | A | 28 March 2022 |
| | | | | KR | 10-2022-0038442 | A | 28 March 2022 |
| | | | | MX | 2022001039 | A | 10 February 2022 |
| | | | | MX | 2022001040 | A | 10 February 2022 |
| | | | | MX | 2022001041 | A | 10 February 2022 |
| | | | | TW | 202105823 | A | 01 February 2021 |
| | | | | TW | 202107764 | A | 16 February 2021 |
| | | | | TW | 202111131 | A | 16 March 2021 |
| | | | | US | 2022-0251681 | A1 | 11 August 2022 |
| | | | | US | 2022-0274841 | A1 | 01 September 2022 |
| | | | | US | 2022-0352570 | A1 | 03 November 2022 |
| | | | | WO | 2021-018778 | A1 | 04 February 2021 |
| | | | | WO | 2021-018788 | A1 | 04 February 2021 |
| | | | | WO | 2021-018796 | A1 | 04 February 2021 |
| KR | 10-2012-0097851 | A | 05 September 2012 | KR | 10-1197439 | B1 | 06 November 2012 |
| KR | 10-1883100 | B1 | 27 July 2018 | None | | | |

Form PCT/ISA/210 (patent family annex) (July 2022)